# EUROPÄISCHE PATENTSCHRIFT

(11) **EP 1 611 181 B1**
(45) Veröffentlichungstag und Bekanntmachung des Hinweises auf die Patenterteilung: **05.07.2006**
(21) Anmeldenummer: 04708739.0
(22) Anmeldetag: 06.02.2004
(51) Int. Cl.: C08G 63/80

(54) **VERFAHREN ZUM ERHÖHEN DES MOLEKULARGEWICHTS EINES POLYMERGRANULATS**
METHOD FOR INCREASING THE MOLECULAR WEIGHT OF A POLYMER GRANULATE
PROCEDE POUR AUGMENTER LE POIDS MOLECULAIRE D'UN GRANULE POLYMERE

(30) Priorität: 02.04.2003 DE 10314991
(43) Veröffentlichungstag der Anmeldung: 04.01.2006
(73) Patentinhaber: Zimmer AG, 60388 Frankfurt (DE)
(72) Erfinder: KIRSTEN, Klaus, 55130 Mainz (DE); STÖHR, Michael, 60439 Frankfurt am Main (DE)
(74) Vertreter: Grünecker, Kinkeldey, Stockmair & Schwanhäusser Anwaltssozietät
(86) Internationale Anmeldenummer: PCT/EP2004/001110
(87) Internationale Veröffentlichungsnummer: WO 2004/087784

(56) Entgegenhaltungen:
- DE-A- 3 213 025
- DE-A- 10 043 277
- DE-B- 1 243 389

## Beschreibung

Die Erfindung betrifft ein Verfahren zum Erhöhen des Molekulargewichts eines Polymergranulats, das aus einer Polykondensationsanlage kommt, mindestens teilweise kristallisiert wird und in einer Nachkondensation mit einem im Kreislauf geführten, stickstoffhaltigen Behandlungsgas in direkten Kontakt gebracht wird, wobei die Temperatur des Polymergranulats in der Nachkondensation gegenüber dem aus der Polykondensationsanlage kommenden Granulat auf 175 bis 250 °C erhöht wird. Das Behandlungsgas sorgt in der Nachkondensation für die Vergleichmäßigung der Temperatur und den Abtransport der durch chemische Reaktionen gebildeten Nebenprodukte.

Als Polymer kommen Polyester, zum Beispiel Polyethylenterephthalat (PETP), Polybutylenterephthalat (PBTP), Polypropylenterephthalat (PTTP) oder Copolyester sowie Polyamide (PA) in Frage. Diese Polymere werden rein oder dotiert bevorzugt zur Herstellung von Verpackungsmaterialien, wie zum Beispiel Filme und Flaschen oder z. B. zur Herstellung hochviskoser Garne und Fasern verwendet.

Die Polykondensation verschiedenster Monomere und die Erhöhung des Molekulargewichts durch Nachkondensation ist bekannt. Einzelheiten sind zum Beispiel in EP 0 685 502 B1, in Römpp, "Chemie-Lexikon", 10. Auflage, S. 1316, und in Houben-Weyl, "Methoden der Organischen Chemie", 4. Auflage, Band E20, Teil 1 , "Festphasen-Polykondensation (Nachreaktion in fester Phase)" beschrieben.

Polykondensationsanlagen werden beschrieben in Ullmanns "Encyclopädie der technischen Chemie", 4. Auflage, Band 19, Seite 117 - 119.

Aus DE 100 43 277 ist ein Verfahren bekannt, bei dem man stickstoff- und gegebenenfalls kohlenwasserstoffhaltiges Abgas aus der Polykondensationsanlage dem Behandlungsgas im Volumenverhältnis 1 : 1 bis 1 : 1000 zumischt, bevor es in die Nachkondensation geleitet wird. Die Kohlenwasserstoffe werden in einer der Nachkondensation vorgeschalteteten Oxidationsstufe entfernt, wobei, falls erforderlich, zusätzlicher Sauerstoff zugeführt wird. Durch dieses Verfahren kann die Zugabe von reinem, sauerstofffreiem Stickstoff von außen, um Leckagen auszugleichen, vermindert werden oder ganz entfallen.

Dieses Verfahren läßt sich jedoch nur anwenden, wenn die Nachkondensationsanlage in räumlicher Nähe zu der Polykondensationsanlage steht, um die Versorgung mit deren kohlenwasserstoffhaltigen Abgas zu ermöglichen. Ein weiterer Nachteil besteht darin, daß die Prozessführung in der Nachkondensationsanlage vom Betriebszustand der Polykondensationsanlage abhängig ist. Betriebsstörungen der Polykondensationsanlagen führen daher zu Betriebsstörungen ebenso in der nachgeschalteten Nachkondensationsanlage. Das Nachrüsten bereits bestehender Anlagenkomplexe mit einem Verfahren gemäß der DE 100 43 277 wird aufwendig und ist in einigen Fällen sogar wirtschaftlich unsinnig.

Für die Erzeugung von Stickstoff aus Luft werden unterschiedliche Verfahren angewendet. Zur Gewinnung von technisch reinen Stickstoffen dient üblicherweise das Druckwechseiabsorptionsverfahren unter Verwendung von Molekularsieben. Das "Linde"-Verfahren der Luftverflüssigung mit anschließender Fraktionierung findet bevorzugt Anwendung, wenn hochreiner Stickstoff und gleichzeitig die in der Luft enthaltenen Edelgase gewonnen werden sollen. Daneben kann Stickstoff aus Luft auch durch Membrantrennverfahren hergestellt werden. Es ist auch bekannt, daß aus technischem Stickstoff der Sauerstoff entfernt werden kann, indem ihm brennbare Gase wie Wasserstoff, Ammoniak oder ähnliche zugegeben werden und das Gasgemisch katalytisch oxidiert wird.

Alle Verfahren sind zum Beispiel beschrieben in "Ullmann's Encyclopedia of Industrial Chemistry", Sixth Edition.

Der Erfindung liegt die Aufgabe zugrunde, das eingangs genannte Polykondensationsverfahren weiter zu verbessern und dabei eine kostengünstige und gleichzeitig betriebssichere Lösung zu finden.

Erfindungsgemäß gelingt dies dadurch, dass man dem Behandlungsgas ein mittels physikalischer oder chemischen Methoden aus Luft gewonnenes stickstoffreiches Frischgas mit einem Restsauerstoffgehalt von 0,1 und 5,0 Vol.%, bevorzugt 1,0 bis 3,0 Vol.% Sauerstoff und Kohlenwasserstoffe zumischt, bevor das Behandlungsgas über eine Oxidationsstufe und anschließend in die Nachkondensation geleitet wird.

Das stickstoffreiche Frischgas kann aus Luft kostengünstig zum Beispiel durch das oben genannte Druckwechselabsorptionsverfahren erzeugt werden.

Das stickstoffreiche Frischgas und die Kohlenwasserstoffe können dem gebrauchten Behandlungsgas vorvermischt oder getrennt zugegeben werden.

Für den Einsatz in der Nachkondensation darf das Behandlungsgas max. 100 ppm Sauerstoff enthalten. Daher muß die Menge der dem Behandlungsgas zugemischten Kohlenwasserstoffe ausreichend sein, um in der Oxidationsstufe den durch das stickstoffreiche Frischgas zugeführten Restsauerstoff möglichst vollständig zu entfernen.

Die Kohlenwasserstoffe sollen ausgewählt werden aus der Gruppe der Alkane, Alkene und Alkine öder Gemischen aus diesen. Bevorzugt werden Propan, Butan, Petrolether, LPG oder deren Gemische verwendet. Als LPG wird hier das zur Beheizung von Wohnungen gebräuchliche Flüssiggas bezeichnet.

Die Menge der zugemischten Kohlenwasserstoffe wird anhand der Messung des Kohlenmonoxidgehaltes, des Kohlenwasserstoffgehaltes, des Sauerstoffgehaltes oder des sogenannten "lambda-Wertes" (dem Verhältnisses Sauerstoffgehalt zu Kohlenwasserstoffgehalt) des Behandlungsgases nach der Oxidationsstufe geregelt. Bevorzugt ist die Regelung anhand der Messung des Kohlenmonoxidgehaltes, da diese Messung keinen Restsauerstoff im Behandlungsgas erfordert. Verfahren und Vorrichtungen zur Durchführung dieser Messungen sind dem Fachmann bekannt.

Das dann in die Nachkondensation geleitete Behandlungsgas ist praktisch frei von Sauerstoff und wird zweckmäßigerweise getrocknet, bevor es in die Nachkondensation eintritt.

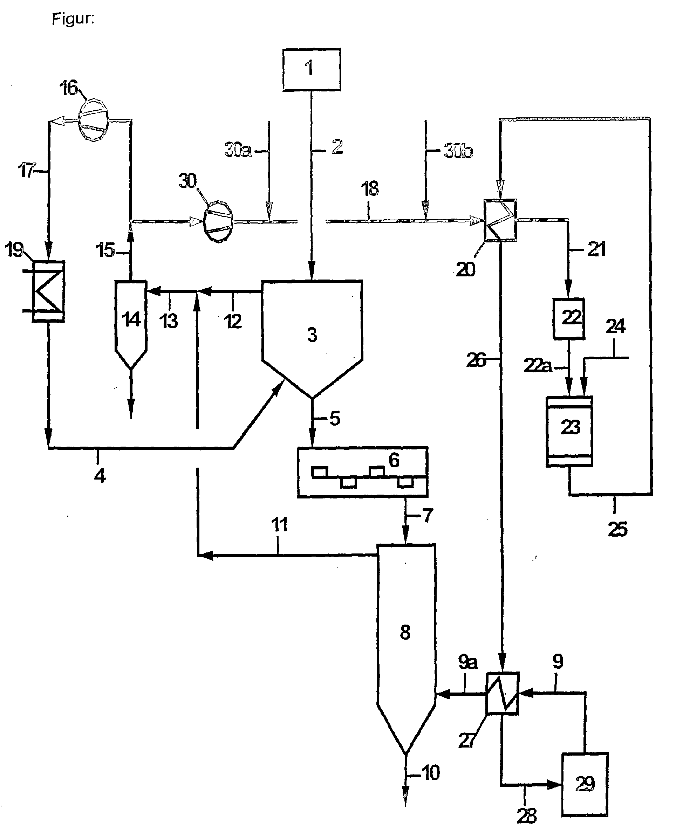

Ausgestaltungsmöglichkeiten des Verfahrens werden mit Hilfe der Zeichnung erläutert. Sie zeigt ein mögliches Fliesschema des Verfahrens, ohne die Erfindung auf diese Ausgestaltungsmöglichkeit zu begrenzen.

Aus einer an sich bekannten Polykondensationsanlage (1) erhält man Polymergranulat, welches man in der Leitung (2) einer Kristallisation zuführt, um Verklebungen zu vermeiden. Diese Kristallisation kann ein- oder mehrstufig ausgeführt sein. Verfahren hierzu sind dem Fachmann bekannt. Im folgenden wird eine zweistufige Kristallisation beschrieben.

In der ersten Stufe (3) wird das Polymergranulat im Wirbelbett mittels stickstoffreichem Fluidisierungsgas aus der Leitung (4) fluidisiert und dabei auf eine erhöhte Temperatur gebracht. Die Temperatur im Wirbelbett liegt im Bereich von 100 bis 250°C und vorzugsweise bei mindestens 150°C. Das Polymergranulat gelangt dann durch die Leitung (5) zur zweiten Kristallisationsstufe (6), die zum Beispiel als Paddelmischer ausgebildet ist, wo das Granulat indirekt erwärmt wird.

Die zweistufige Kristallisation, zumeist mit Temperaturerhöhung in jeder Stufe, sorgt bereits für eine Erhöhung des Kristallisationsgrades, jedoch nicht für eine ausreichende Erhöhung des Molekulargewichts des Polymers. Zur weiteren Erhöhung des Molekulargewichts und damit auch der Viskosität ist der Nachkondensationsreaktor (8) vorgesehen, dem man das Granulat durch die Leitung (7) zuführt. Dem Reaktor (8) führt man durch die Leitung (9a) trockenes, praktisch sauerstofffreies Behandlungsgas zu, dessen Hauptkomponente Stickstoff ist. Das Behandlungsgas wird aufwärts durch das im Reaktor befindliche Festbett geführt, wobei man die Temperatur vergleichmäßigt und Reaktionsprodukte abführt. Die Verweilzeiten des Granulats im Reaktor (8) liegen üblicherweise im Bereich von 8 bis 22 Stunden. Polymergranulat mit erhöhtem Molekulargewicht zieht man aus dem Reaktor (8) in der Leitung (10) ab und führt es zweckmäßigerweise einer nicht dargestellten Kühlung und Entstaubung zu.

Gebrauchtes Behandlungsgas wird aus dem Nachkondensationsreaktor (8) in der Leitung (11) abgezogen und mit dem Gas der Leitung (12) gemischt. Das gebildete Gasgemisch führt man durch die Leitung (13) zum Entstauben durch einen Zyklon (14) und entstaubtes Gas wird durch die Leitung (15) mit Hilfe des Gebläses (16) abgesaugt und auf die Leitungen (17) und (18) verteilt. Das Gas der Leitung (17) gelangt über den Erhitzer (19) und die Leitung (4) zurück in die erste Kristallisationsstufe (3).

Der Gasstrom der Leitung (18) wird nach einer Feinreinigung als Behandlungsgas in den Reaktor (8) zurückgeführt. Zunächst gibt man dem Gas der Leitung (18) durch die Leitung (30a) Kohlenwasserstoffe zu.

Durch die Leitung 30b wird das mittels physikalischer Methoden aus Luft gewonnene stickstoffreiche Gas zugemischt, um Gasverluste auszugleichen. Die Reihenfolge der Zugabe kann auch umgekehrt sein. Es ist auch möglich, durch Leitung (30a) das stickstoffreiche Gas und die Kohlenwasserstoffe, gegebenenfalls nach vorheriger Vermischung, gemeinsam zuzumischen.

Eine erste Erwärmung erfolgt im indirekten Wärmeaustauscher (20). Dann gibt man das Gas durch die Leitung (21) einem Erhitzer (22) auf, um in der Leitung (22a) die gewünschte Eintrittstemperatur für den Oxidationsreaktor (23) zu erreichen. Der Oxidationsreaktor (23) enthält zum Beispiel ein Festbett eines körnigen Oxidationskatalysators (zum Beispiel auf Platin- oder Palladium-Basis), um Kohlenwasserstoffe oxidativ zu beseitigen. Falls notwendig, wird Sauerstoff z.B. in Form von Luft durch die Leitung (24) zugespeist.

Das den Reaktor (23) durch die Leitung (25) verlassende Gas hat eine erhöhte Temperatur, die in der Nähe von 400°C liegen kann. Das Gas gibt einen Teil seiner fühlbaren Wärme im Wärmeaustauscher (20) ab und strömt dann durch die Leitung (26) zu einem weiteren Wärmeaustauscher (27), bevor es durch die Leitung (28) einer Trocknung (29) zugeführt wird. Die Trocknung kann zum Beispiel in an sich bekannter Weise absorbtiv arbeiten. Das getrocknete Gas strömt durch die Leitung (9) zum Wärmeaustauscher (27) und gelangt durch die Leitung (9a) als Behandlungsgas in den Reaktor (8). Vorzugsweise weist dieses Behandlungsgas einen Kohlenmonoxid-Gehalt von 10 bis 500 mg/Nm³ auf.

Es ist weiterhin möglich, dass man zusätzlich stickstoffhaltiges Abgas aus der Polykondensationsanlage dem Behandlungsgas im Volumenverhältnis von 1:1 bis 1:1000 zumischt, bevor es in die Nachkondensation geleitet wird. Ein Verfahren zur Zumischung von stickstoffhaltigem Abgas aus der Polykondensationsanlage zum Behandlungsgas ist aus DE 100 43 277 bekannt. In diesem Fall leitet man das stickstoffhaltige Abgas vor dem Gebläse (30) in die Leitung (18) ein.

### Beispiel

In einer konventionellen Polykondensationsanlage (1) erzeugt man aus Terephthalsäure, Isophthalsäure und Ethylenglykol Polyethylenterephthalat (PETP), welches der Zeichnung entsprechend weiterbehandelt wird. Die Veränderung des Polykondensationszustands des PETP-Granulates zeigt Tabelle I:

**Tabelle I**

| Leitung | 2 | 5 | 7 | 10 |
|---|---|---|---|---|
| Molekulargewicht (g/mol) | 18612 | 18282 | 18754 | 29026 |
| Intrinsic Viscosity (dl/g) | 0,625 | 0,618 | 0,628 | 0,825 |

Es wird mit einem Wirbelbett-Kristallisator (3) bei 160°C und einem Paddelkristallisator (6) bei 205°C gearbeitet, die Verweilzeit im Wirbelbett-Kristallisator beträgt 15 Minuten und im Paddelkristallisator 60 Minuten. Im Reaktor (8) befindet sich das Granulat im Festbett. Bei einer Temperatur von 205°C beträgt die Verweilzeit im Reaktor (8) 11 Stunden. Ferner wird ein Elektroerhitzer (22) und eine Absorptionstrocknung (29) mittels Molekularsieb verwendet. Dem Wirbelbett-Kristallisator (3) führt man 7532 kg/h PETP-Granulat von 60°C zu, durch die Leitung (24) wird Luft herangeführt. Gasmengen und Temperaturen zeigt Tabelle II:

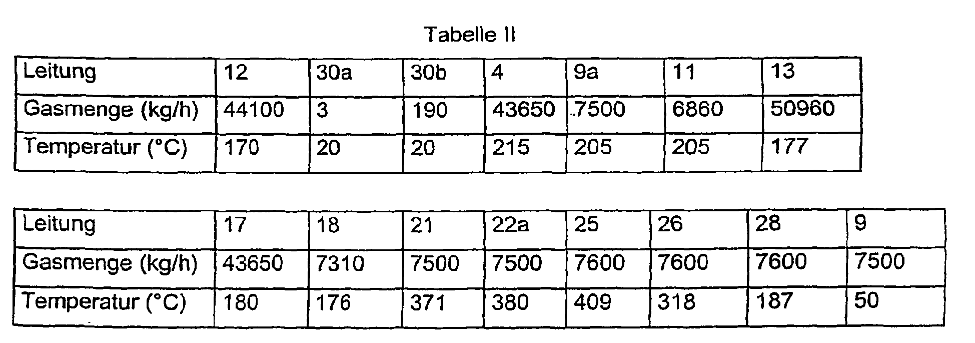

Gaszusammensetzungen gibt Tabelle III an, dabei bedeutet OK = organische Komponenten:

**Tabelle III**

| Leitung | 12 | 30a | 9a | 11 | 18 | 30b |
|---|---|---|---|---|---|---|
| H₂O(kg/h) | 158 | - | - | 0,9 | 26,2 | - |
| N₂ (kg/h) | 43865 | - | 7500 | 6853,4 | 7271 | 186,2 |
| OK(kg/h) | 65,2 | 3 | - | 5,7 | 11 | - |
| O₂ (kg/h) | 11,8 | - | - | - | 2 | 3,8 |

## Patentansprüche

1. Verfahren zum Erhöhen des Molekulargewichts eines Polymergranulats, das aus einer Polykondensationsanlage kommt, mindestens teilweise kristallisiert wird und in einer Nachkondensation mit einem stickstoffhaltigen Behandlungsgas in direkten Kontakt gebracht wird, wobei die Temperatur des Polymergranulats in der Nachkondensation gegenüber dem aus der Polykondensationsanlage kommenden Granulat auf 175 bis 250°C erhöht wird, **dadurch gekennzeichnet, dass** man dem Behandlungsgas ein mittels physikalischer Methoden aus Luft gewonnenes stickstoffreiches Frischgas mit einem Restsauerstoffgehalt von 0,1 - 5 Vol% und Kohlenwasserstoffe zumischt, bevor es über eine Oxidationsstufe und anschließend in die Nachkondensation geleitet wird.

2. Verfahren nach Anspruch 1, **dadurch gekennzeichnet, dass** die Menge der zugemischten Kohlenwasserstoffe ausreichend ist, um in der Oxidationsstufe den Sauerstoff zu entfernen, der durch das aus Luft gewonnene stickstoffreiche Frischgas zugeführt wurde.

3. Verfahren nach Anspruch 1 oder 2, **dadurch gekennzeichnet, dass** die Kohlenwasserstoffe ausgewählt werden aus der Gruppe der Alkane, Alkene und Alkine oder deren Gemischen.

4. Verfahren nach Anspruch 3, **dadurch gekennzeichnet, dass** die Kohlenwasserstoffe ausgewählt werden aus der Gruppe, enthaltend Propan, Butan, LPG oder deren Gemische.

5. Verfahren nach Anspruch 1 bis 4, **dadurch gekennzeichnet, dass** die Menge der zugemischten Kohlenwasserstoffe anhand der Messung des Kohlenmonoxidgehaltes, des Kohlenwasserstoffgehaltes; des Sauerstoffgehaltes oder des Verhältnisses Sauerstoffgehalt zu Kohlenwasserstoffgehalt des Behandlungsgases nach der Oxidationsstufe geregelt wird.

6. Verfahren nach Anspruch 1 bis 5, **dadurch gekennzeichnet, dass** man zusätzlich stickstoffhaltiges Abgas aus der Polykondensationsanlage dem Behandlungsgas im Volumenverhältnis von 1:1 bis 1:1000 zumischt, bevor es in die Nachkondensation geleitet wird.

7. Verfahren zur Herstellung eines stickstoffreichen Gases zur Verwendung bei der Erhöhung des Molekulargewichtes eines Polymergranulats, das aus einer Polykondensationsanlage kommt, in dem mindestens in einen Reaktor stickstoffhaltiges Inertgas eingeleitet wird, mindestens teilweise kristallisiert wird und das Polymergranulat in einer Nachkondensation mit einem sticlcstoffhaltigen Behandlungsgas in direkten Kontakt gebracht wird, wobei die Temperatur des Polymergranulates in der Nachkondensation gegenüber dem aus der Polykondensationsanlage kommenden Granulat auf 175 bis 250°C erhöht wird, **dadurch gekennzeichnet, dass** man dem Behandlungsgas mittels physikalischer Methoden aus Luft gewonnenes stickstoffreiches Frischgas mit einem Restsauerstoffgehalt von 0,1 - 5 Vol% und Kohlenwasserstoffe zumischt, bevor es über eine Oxidationsstufe und anschließend in die Nachkondensation geleitet wird.

## Claims

1. A method for increasing the molecular weight of a polymer granulate, which comes from a polycondensation plant, is at least partially crystallised and, in a post-condensation, is brought into direct contact with a nitrogen-containing treatment gas, the temperature of the polymer granulate in the post-condensation being increased to from 175°C to 250°C compared to the granulate coming from the polycondensation plant, **characterised in that** a nitrogen-rich fresh gas, extracted from air using physical methods with a residual oxygen content of 0.1 - 5% vol. and with hydrocarbons is admixed to the treatment gas, before it is passed via an oxidation stage and then to the post-condensation.

2. The method according to Claim 1, **characterised in that** the quantity of the admixed hydrocarbons is sufficient to remove, in the oxidation stage, the oxygen which was supplied by the nitrogen-rich fresh gas extracted from the air.

3. The method according to Claim 1 or 2, **characterised in that** the hydrocarbons are selected from the group consisting of alkanes, alkenes and alkines or mixtures thereof.

4. The method according to Claim 3, **characterised in that** the hydrocarbons are selected from the group comprising propane, butane, LPG or mixtures thereof.

5. The method according to Claim 1 to 4, **characterised in that** the quantity of the admixed hydrocarbons is controlled based on the measurement of the carbon monoxide content, the hydrocarbon content, the oxygen content or the ratio of the oxygen content to the hydrocarbon content of the treatment gas after the oxidation stage.

6. The method according to Claim 1 to 5, **characterised in that** in addition nitrogen-containing off-gas from the polycondensation plant is admixed to the treatment gas in a volume ratio of from 1:1 to 1:1000 additionally, before it is passed to the post-condensation.

7. A method for the production of a nitrogen-rich gas for use in increasing the molecular weight of a polymer granulate which comes from a polycondensation plant, wherein nitrogen-rich inert gas is fed into at least one reactor, said polymer granulate is at least partially crystallised and the polymer granulate is brought into direct contact with a nitrogen-containing treatment gas in a post-condensation, whereas the temperature of the polymer granulate in the post-condensation being increased to from 175°C to 250°C compared to the granulate coming from the polycondensation plant, **characterised in that** nitrogen-rich fresh gas, extracted from air using physical methods, with a residual oxygen content of 0.1 - 5% vol. and with hydrocarbons is admixed to the treatment gas before it is passed via an oxidation stage and then into the post-condensation.

## Revendications

1. Procédé pour augmenter le poids moléculaire d'un granulé polymère, qui provient d'une installation de polycondensation, qui est au moins partiellement cristallisé et mis contact direct avec un gaz de traitement azoté dans une post-condensation, la température du granulé polymère dans la post-condensation étant augmentée à une température de 175 à 250°C, par rapport au granulé provenant de l'installation de polycondensation, **caractérisé en ce que** l'on ajoute par mélange au gaz de traitement un gaz frais riche en azote, extrait de l'air par des méthodes physiques, avec une teneur en oxygène résiduelle de 0,1 à 5 % en volume, et des hydrocarbures, avant qu'il ne soit conduit par une étape d'oxydation et ensuite à la post-condensation.

2. Procédé selon la revendication 1, **caractérisé en ce que** la quantité d'hydrocarbures additionnés est suffisante pour éliminer, à l'étape d'oxydation, l'oxygène, qui a été amené par le gaz frais riche en azote extrait de l'air.

3. Procédé selon la revendication 1 ou 2, **caractérisé en ce que** les hydrocarbures sont choisis dans le groupe des alcanes, des alcènes et des alcynes ou leurs mélanges.

4. Procédé selon la revendication 3, **caractérisé en ce que** les hydrocarbures sont choisis dans le groupe constitué du propane, du butane, du GPL et de leurs mélanges.

5. Procédé selon la revendication 1 à 4, **caractérisé en ce que** la quantité d'hydrocarbures additionnés est régulée à l'aide de la mesure de la teneur en monoxyde de carbone, de la teneur en hydrocarbure, de la teneur en oxygène ou du rapport de la teneur en oxygène sur la teneur en hydrocarbure du gaz de traitement après l'étape d'oxydation.

6. Procédé selon la revendication 1 à 5, **caractérisé en ce que** l'on ajoute par mélange, en plus, au gaz de traitement, du gaz d'échappement azoté provenant de l'installation de polycondensation en un rapport volumique de 1/1 à 1/1000, avant qu'il ne soit conduit à la condensation ultérieure.

7. Procédé de fabrication d'un gaz riche en azote pour l'utilisation dans un procédé destiné à augmenter le poids moléculaire d'un granulé polymère qui provient d'une installation de polycondensation, dans lequel du gaz inerte azoté est conduit dans au moins un réacteur, est au moins partiellement cristallisé et le granulé polymère est mis en contact direct dans une post-condensation avec un gaz de traitement azoté, la température du granulé polymère dans la post-condensation étant augmentée à une température de 175 à 250°C, par rapport au granulé provenant de l'installation de polycondensation, **caractérisé en ce que** l'on ajoute par mélange au gaz de traitement un gaz frais riche en azote extrait de l'air par des méthodes physiques, avec une teneur en oxygène résiduelle de 0,1 à 5 % en volume, et des hydrocarbures, avant qu'il ne soit conduit par une étape d'oxydation et ensuite à la post-condensation.
